(19) Europäisches Patentamt
European Patent Office
Office européen des brevets

(11) **EP 3 274 687 B1**

(12) **FASCICULE DE BREVET EUROPEEN**

(45) Date de publication et mention de la délivrance du brevet:
**01.07.2020   Bulletin 2020/27**

(21) Numéro de dépôt: **16719443.0**

(22) Date de dépôt: **23.03.2016**

(51) Int Cl.:
**G01N 15/02** *(2006.01)*       **G01N 15/14** *(2006.01)*

(86) Numéro de dépôt international:
**PCT/FR2016/050642**

(87) Numéro de publication internationale:
**WO 2016/151247 (29.09.2016 Gazette 2016/39)**

(54) **PROCÉDÉ DE DÉTERMINATION DE LA TENEUR EN EAU DANS L'ATMOSPHÈRE, PROCÉDÉ DE DÉTECTION DE CONDITIONS GIVRANTES ET PROGRAMMES D'ORDINATEUR**

VERFAHREN ZUR BESTIMMUNG DES WASSERGEHALTS IN DER ATMOSPHÄRE, VERFAHREN ZUR DETEKTION VON VEREISUNGSBEDINGUNGEN UND COMPUTERPROGRAMME

METHOD FOR DETERMINING THE WATER CONTENT IN THE ATMOSPHERE, METHOD FOR DETECTING ICING CONDITIONS AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.03.2015   FR 1552402**

(43) Date de publication de la demande:
**31.01.2018   Bulletin 2018/05**

(73) Titulaire: **Zodiac Aerotechnics**
**78370 Plaisir (FR)**

(72) Inventeurs:
• **THOREZ, Manuel**
  **91470 Les Molieres (FR)**
• **PASZKIEWICZ, Laurent**
  **92140 Clamart (FR)**

(74) Mandataire: **Plasseraud IP**
**66, rue de la Chaussée d'Antin**
**75440 Paris Cedex 09 (FR)**

(56) Documents cités:
• YOSHIO ZAMA ET AL: "Simultaneous Measurement of Droplet Size and Three-Components of Velocity in Spray", OPTICAL REVIEW, SPRINGER, BERLIN, DE, vol. 11, no. 6, 1 décembre 2004 (2004-12-01), pages 358-364, XP019353229, ISSN: 1349-9432, DOI: 10.1007/S10043-004-0358-Y
• YOSHIO ZAMA ET AL: "Simultaneous measurement method of size and 3D velocity components of droplets in a spray field illuminated with a thin laser-light sheet; Simultaneous measurement method of size and 3D velocity components of droplets", MEASUREMENT SCIENCE AND TECHNOLOGY, IOP, BRISTOL, GB, vol. 16, no. 10, 1 octobre 2005 (2005-10-01), pages 1977-1986, XP020090417, ISSN: 0957-0233, DOI: 10.1088/0957-0233/16/10/013

**EP 3 274 687 B1**

**Description**

La présente invention se situe dans le domaine de détection de conditions givrantes dans un aéronef en vol.

En particulier, la présente invention concerne un procédé de détermination de la teneur en eau dans l'atmosphère et un procédé de détection de conditions atmosphériques givrantes. L'invention se rapporte également à un programme d'ordinateur.

Depuis le début des années 1990, des incidents de réacteurs et des anomalies de mesures de vitesse aérodynamique et de température des avions de ligne ont été observés à haute altitude et basse température. En 2004, un groupe de travail sur l'harmonisation des moteurs appelé EHWG (de l'anglais « Engine Harmonization Working Group ») a établi que les conditions givrantes dues à la présence de grosses gouttelettes en surfusion (en anglais SLD pour « Supercooled Large Droplets »), à la présence de cristaux de glace, ou encore à la présence simultanée de SLD et de cristaux de glace étaient à l'origine de ces anomalies. L'Administration de l'Aviation Fédérale américaine FAA, de l'anglais « Federal Aviation Administration » ainsi que l'Agence de Sécurité de l'Aviation Européenne EASA, de l'anglais « European Aviation Safety Agency », ont introduit en novembre 2014 des modifications de la réglementation en vigueur pour enrayer la menace que représentent de telles conditions givrantes pour la sécurité des avions en vol. Cette nouvelle règlementation est décrite dans le document intitulé « Aircraft and Engine Certification Requirements for Supercooled Large Drop, Mixed Phase and Ice Crystal Icing Conditions, Federal Aviation Administration Docket No. FAA-2010-0636, Amendment Nos. 25-140 and 33-34, Nov. 4, 2014 »

Le règlement CS25 et notamment son Annexe O (en anglais « 14 CFR part 25, Appendix O ») stipulent que les gouttelettes d'eau de diamètre compris entre 5 micromètres et 2300 micromètres doivent pouvoir être détectées. Le règlement CS33 et notamment son Annexe D (en anglais « 14 CFR part 33, Appendix D ») stipulent que les cristaux de glace de dimension comprise entre 5 micromètres et 2700 micromètres doivent pouvoir être détectés.

La technique d'imagerie laser interférométrique pour la détermination de la taille des gouttelettes, généralement appelée technique ILIDS de l'anglais « Interferometric Laser Imaging for Droplet Sizing », mise au point il y a environ 30 ans, permet de mesurer la taille des gouttelettes sphériques dans un plan (analyse en 2 dimensions). Selon cette technique les gouttelettes d'eau sont éclairées par une nappe laser polarisée à un angle d'observation spécifique. Deux points lumineux, appelés points de gloire, sont visibles à la surface des gouttelettes. Ces points de gloire créent un motif d'interférences ayant la forme de franges parallèles quand ils sont imagés dans un plan en dehors du plan focal d'un système optique. L'interfrange, c'est-à-dire la distance entre deux franges successives, est inversement proportionnelle à la distance entre ces deux points de gloire. Ainsi, une mesure de l'interfrange permet de déterminer le diamètre des gouttelettes.

Cette technique a également été utilisée pour déterminer une dimension d'une particule solide comme décrit dans les documents « Z. ULANOWSKI et al. Retrieving the size of particles with rough and complex surfaces from two-dimensional scattering patterns. Journal of Quantitative Spectroscopy and Radiative Transfer. 2012 » et « D. CHICEA. Biospeckle size and contrast measurement application in particle sizing and concentration assessment. Biophysics, September 12, 2006 ». Selon ces documents, lorsqu'un cristal de glace solide de forme quelconque et de surface rugueuse est éclairé par une nappe laser, une multitude de points de gloire sont visibles sur la surface du cristal. L'image en dehors du plan focal montre une image de tavelures (en anglais « speckle »). La taille du grain de tavelure est inversement proportionnelle à la plus grande dimension du cristal de glace visible.

Toutefois, l'imagerie interférométrique en défaut de mise au point ILIDS permet de mesurer des gouttes d'eau ou des cristaux de glace dont les dimensions varient dans un rapport d'environ une décade uniquement, notamment en raison des performances limitées des imageurs existants sur le marché.

Or, la dimension des gouttes d'eau et des cristaux de glace présents dans l'atmosphère varie entre 5 $\mu$m et 2 700 $\mu$m. Cette plage de dimensions est bien supérieure à la plage de dimensions pouvant être déterminée par l'imagerie interférométrique classique.

Le document « YOSHIO ZAMA ET AL : « Simultaneous Measurement of Droplet Size and Three-Components of velocity in Spray » XP019353229 » décrit une méthode permettant de déterminer la vitesse et la distribution de gouttes projetées par un jet d'essence afin de déterminer si le mélange air-essence est adapté au fonctionnement d'une turbine ou d'un moteur.

L'invention a pour but de proposer un procédé de détermination de la teneur en eau dans l'atmosphère qui tienne compte des particules d'eau et de glace ayant des dimensions comprises dans l'ensemble de la plage de dimensions établie par la réglementation.

A cet effet, l'invention a pour objet un procédé de détermination de la teneur en eau dans l'atmosphère par traitement d'images acquises par un dispositif d'imagerie interférométrique en défaut de mise au point embarqué dans un aéronef en vol, ledit procédé étant mis en œuvre par une unité de traitement comportant une unité de calcul et une unité de stockage, ladite unité de stockage comportant au moins une distribution prédéterminée du nombre de particules en fonction de la dimension de ces particules en dehors d'une plage de dimensions donnée, ladite distribution prédéterminée comprenant un nombre de particules ayant une dimension seuil, ledit dispositif étant uniquement propre à imager des particules d'eau et de glace ayant une dimension comprise dans la plage de dimensions donnée, ledit procédé comprenant les étapes suivantes

Pour au moins une image ,

a) Déterminer le nombre de particules comprises dans la plage de dimensions donnée à partir de ladite image ;

b) Mesurer la masse des particules ayant une dimension comprise dans la plage de dimensions donnée à partir du nombre de particules déterminé ;

c) Estimer la masse des particules ayant une dimension en dehors de la plage de dimensions donnée, ladite étape d'estimation comprenant les étapes suivantes :

i) Déterminer le nombre de particules ayant une dimension égale à la dimension seuil ;

ii) Evaluer le nombre de particules en dehors de la plage de dimensions donnée par multiplication de la distribution prédéterminée par le rapport entre le nombre de particules déterminé à l'étape i) et le nombre de particules de ladite distribution ayant ladite dimension seuil ;

iii) Estimer la masse des particules en dehors de la plage de dimensions donnée à partir du nombre de particules évalué ;

iv) Déterminer la teneur en eau par addition de la masse estimée et de la masse mesurée.

Suivant des modes particuliers de réalisation, le procédé de détermination comporte l'une ou plusieurs des caractéristiques suivantes :

- les distributions prédéterminées ont été préalablement établies à partir de nombreuses mesures ;
- les distributions prédéterminées ont été préalablement établies en fonction de la température extérieure, l'unité de calcul (26) étant propre à recevoir une valeur de température extérieure et à sélectionner une distribution préétablie pour cette valeur de température ;
- la plage de dimensions donnée (P) est comprise entre 50 micromètres et 1000 micromètres, et est de préférence comprise entre 70 micromètres et 700 micromètres.

L'invention concerne également un procédé de détection des conditions atmosphérique givrantes, qui comporte les étapes suivantes:

- détermination de la teneur en eau par mise en œuvre du procédé de détermination selon l'une quelconque des caractéristiques mentionnées ci-dessus ;
- réception d'une valeur de température extérieure ;
- détection des conditions atmosphériques givrantes à partir de la teneur en eau et de la valeur de température extérieure.

Enfin, l'invention concerne un programme d'ordinateur comportant des instructions pour mettre en œuvre le procédé de détermination décrit ci-dessus, lorsqu'il est exécuté par un processeur et un programme d'ordinateur comportant des instructions pour mettre en œuvre le procédé de détection décrit ci-dessus, lorsqu'il est exécuté par un processeur.

L'invention sera mieux comprise à la lecture de la description qui va suivre, donnée uniquement à titre d'exemple et faite en se référant aux figures sur lesquelles :

- la figure 1 qui est une vue schématique du dispositif de détermination de la teneur en eau selon la présente invention ;
- la figure 2 est une vue de dessus du dispositif de détermination représenté sur la figure 1 ;
- La figure 3 est une représentation schématique d'une image acquise par le dispositif de détermination représenté sur la figure 1 ;
- La figure 4 est un diagramme des étapes du procédé de détermination selon un premier mode de réalisation de l'invention ;
- La figure 5 est un graphe représentant une distribution du nombre de particule d'eau en fonction de la dimension de ces particules obtenue par mises en œuvre d'une première et d'une deuxième méthodes ;
- La figure 6 est un graphe représentant la distribution du nombre de particules d'eau en fonction de la dimension de ces particules obtenue par mise en œuvre uniquement de la deuxième méthode ;
- La figure 7 est un diagramme des étapes du procédé de détermination selon un deuxième mode de réalisation de l'invention ;
- La figure 8 est un graphe représentant une distribution prédéterminée du nombre de particules d'eau en fonction de la dimension des particules d'eau dans deux plages de dimensions estimées PE1 et PE2 ;
- La figure 9 est un graphe représentant la distribution du nombre de particules d'eau en fonction de la dimension de ces particules obtenue par mise en œuvre du deuxième mode de réalisation de l'invention ;
- La figure 10 est un diagramme des étapes du procédé de détermination selon un troisième mode de réalisation de l'invention ;
- La figure 11 est un graphe représentant la distribution du nombre de particules d'eau en fonction de la dimension de ces particules obtenue par mise en œuvre du troisième mode de réalisation de l'invention ;
- La figure 12 est un diagramme des étapes du procédé de détection des conditions givrantes selon l'invention ; et
- La figure 13 est un diagramme des sous étapes de l'étape de détermination du nombre de particules dans la plage de dimension donnée P.

Dans la présente demande de brevet, le terme « particule » a été utilisé pour désigner à la fois des gouttelettes d'eau et des cristaux de glace. Le terme « dimension di » a été utilisé pour définir la taille d'une particule dans le plan perpendiculaire à l'axe de diffusion tel que défini ci-après. La teneur en eau est définie comme étant la quantité d'eau solide et liquide dans un volume d'air de l'atmosphère.

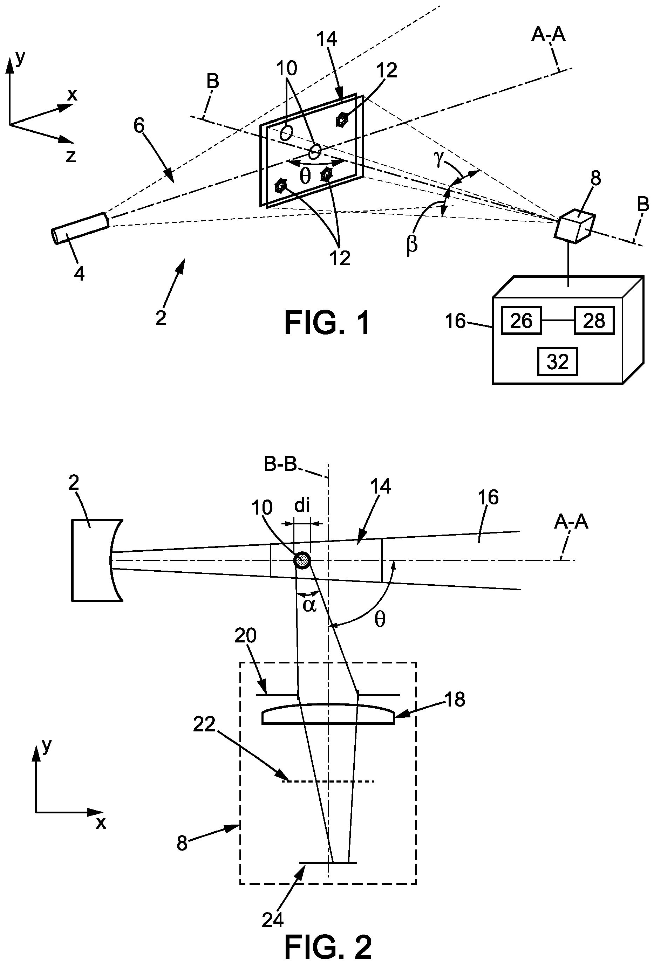

Le procédé de détermination de la teneur en eau dans l'atmosphère selon l'invention est réalisé par traitement d'images acquises par un dispositif de détermination 2 représenté sur la figure 1. Ce dispositif de détermination 2 permet d'acquérir des images par imagerie interférométrique en défaut de mise au point (ILIDS). Ce dispositif de détermination 2 est embarqué dans un aéronef en vol.

Le dispositif de détermination 2 comprend :

- un émetteur laser 4 propre à émettre un faisceau laser 6 pulsé ayant un axe d'émission A-A,
- un imageur 8 en défaut de mise au point propre à capturer des images de particules 10, 12 comprises dans un volume d'échantillonnage 14 ;
- une unité de traitement 16 en liaison de communication avec l'imageur 8, par exemple en liaison de communication filaire.

L'émetteur laser 4 et l'imageur 8 sont, par exemple, placés à l'intérieur du fuselage d'un aéronef et pointent vers l'extérieur au travers d'un hublot.

L'émetteur laser 4 comprend une unité non représentée propre à émettre le faisceau laser 6 et un dispositif optique non représenté apte à focaliser le faisceau laser émis 6 en une nappe. Cette nappe s'étend dans un plan, dit plan d'émission (x, y), en considérant le repère orthogonal direct (x, y, z) représenté sur la figure 1.

De préférence, le faisceau laser 6 présente une forme qui diverge selon une direction z perpendiculaire au plan d'émission (x, y) depuis une partie de l'espace à proximité de l'émetteur laser 2 vers une partie de l'espace plus éloignée de l'émetteur laser 2, comme visible sur la figure 2. Cette forme est, par exemple, obtenue par un système optique comportant deux lentilles cylindriques.

Le faisceau laser 6 présente un profil d'intensité rectangulaire uniforme généralement appelé en anglais « top-hat ». Le faisceau laser 6 est polarisé soit dans un plan (x, z) soit dans le plan d'émission (x, y).

La longueur d'onde du laser est, par exemple, égale à 532 nm ou à 1500 nm. La fréquence de pulsation du laser est synchronisée à la fréquence d'acquisition des images par l'imageur 8.

L'imageur 8 est, par exemple, constitué par une caméra CCD. Il possède un axe optique B-B qui forme un angle θ avec le plan d'émission (x, y) de la nappe laser. Cet angle θ est généralement appelé angle de diffusion. Il est fixe. Il est prédéterminé de manière à obtenir pour chaque particule d'eau des points de gloire ayant des intensités équivalentes. L'angle de diffusion est, par exemple, égale à 90°.

L'imageur 8 est propre à capturer des images formées par la diffusion du faisceau laser 6 sur les particules situées dans le volume d'échantillonnage 14. Les particules imagées par l'imageur 8 sont les particules d'eau 10 et les particules de glace 12 contenues dans le volume d'échantillonnage 14.

En référence à la figure 2, l'imageur 8 comprend un système optique convergent 18 de focale F, une pupille 20 et un plan d'acquisition d'images 22 situé en amont du plan focal 24 du système optique convergent 18.

L'imageur 8 présente un champ de vue défini par les angles de champ γ et β. Ces angles de champ γ et β ainsi que la distance entre l'imageur 8 et le faisceau laser 6 déterminent la hauteur et la largeur du volume d'échantillonnage 14.

La pupille 20 du système optique 18 et la longueur de l'axe de diffusion B-B comprise entre la pupille 20 et l'axe de d'émission A-A, définissent un cône. L'angle au sommet de ce cône est appelé angle de collection a. La valeur de cet angle de collection est égale à :

$$\alpha = \operatorname{atan}(\Phi/D)$$

où

- atan est la fonction mathématique arc-tangente,
- Φ est le diamètre de la pupille 20 de l'imageur 8, et
- D est la longueur de l'axe de diffusion B-B comprise entre la pupille 20 et l'axe de d'émission A-A.

La "défocalisation" est la distance entre le plan d'acquisition d'images 22 et le plan focal 24.

Les paramètres d'acquisition de l'imageur 8 sont adaptés à la plage de dimensions et aux concentrations des particules que l'on souhaite mesurer. Les paramètres d'acquisition comprennent les angles de champ γ, β, la défocalisation, la distance focale F du système optique convergent, l'angle de collection α, la distance entre le faisceau laser et l'imageur, ainsi que la résolution spatiale de l'imageur.

L'unité de traitement 16 est propre à recevoir au moins une image 30 acquise par l'imageur 8 et à traiter cette image à partir du procédé de détermination décrit ci-après. L'unité de traitement 16 est apte à générer une information relative à la teneur en eau dans l'atmosphère à partir du traitement de cette au moins une image 30.

L'unité de traitement 16 peut également comporter une entrée 32 propre à recevoir une valeur de température de l'air extérieure. Cette valeur de température extérieure est, par exemple, fournie par un dispositif de mesure de température externe déjà existant dans l'aéronef. Lorsque l'unité de traitement 16 comporte une entrée 32, elle est également adaptée pour détecter des conditions atmosphériques givrantes en fonction de la teneur en eau déterminée et de la valeur de la température de l'air extérieure réceptionnée comme décrit dans le procédé de détection décrit ci-après.

L'unité de traitement 16 comprend une unité de calcul 26 et une unité de stockage 28 propre à stocker des instructions pour mettre en œuvre un procédé de détermination de la teneur en eau selon l'invention.

L'unité de calcul 26 est propre à exécuter les instructions stockées dans l'unité de stockage 28. L'unité de stockage 28 comporte également des distributions prédéterminées du nombre de particules en fonction de la dimension des particules dans une plage de dimensions estimée. Ces distributions sont des distributions typiques du nombre de particules en fonction de leur dimension. Elles ont été préalablement établies à partir de nombreuses mesures. Dans l'exemple du mode de réalisation décrit ci-après, l'unité de stockage 28 comporte une distribution prédéterminée 34 pour les particules d'eau dans une première plage de dimensions estimée PE1, une distribution 84 prédéterminée pour les particules d'eau dans une deuxième plage de dimensions estimée PE2, une distribution prédéterminée 34 pour les particules de glace dans la première plage de dimensions estimée PE1, une distribution prédéterminée pour les particules de glace dans la deuxième plage de dimensions estimée PE2.

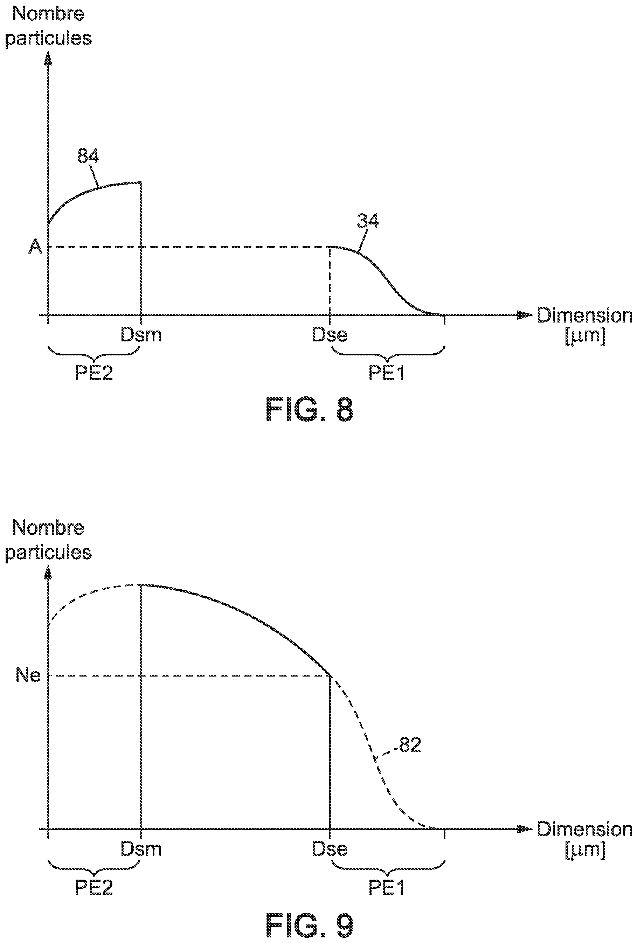

En variante, les distributions sont établies en fonction de la température extérieure. Dans ce cas, l'unité de calcul 26 est propre à recevoir une valeur de température extérieure et à sélectionner la distribution préétablie pour cette valeur de température. Deux exemples de distribution des particules d'eau ont été illustrés sur la figure 8. Les distributions de particules de glaces n'ont pas été représentées.

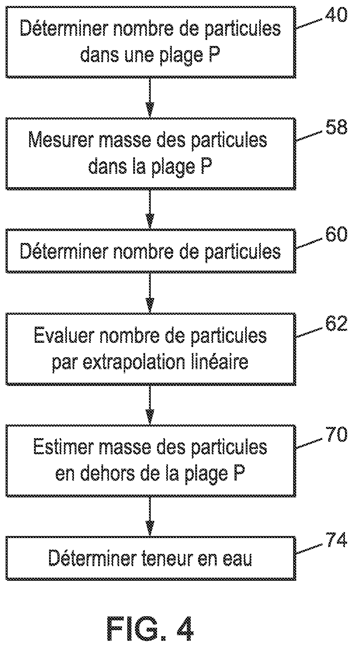

En référence à la figure 4, le procédé de détermination selon un premier exemple de réalisation non couvert par la présente demande de brevet débute par une étape 40 au cours de laquelle l'unité de traitement 16 détermine le nombre de particules 10, 12 du volume d'échantillonnage 14. Ces particules 10, 12 sont contenues uniquement dans une plage P de dimensions donnée en raison de la trop grande variance des dimensions des particules par rapport aux performances (résolutions, dynamique) des imageurs existants.

La plage de dimensions données mesurable par l'imageur 8 est définie par les paramètres d'acquisition. De préférence, les paramètres d'acquisition sont choisis de manière à ce que la plage de dimensions donnée P soit comprise entre 50 micromètres et 1000 micromètres. Et avantageusement, les paramètres d'acquisition sont choisis de manière à ce que la plage de dimensions donnée P soit comprise entre 70 micromètres et 700 micromètres.

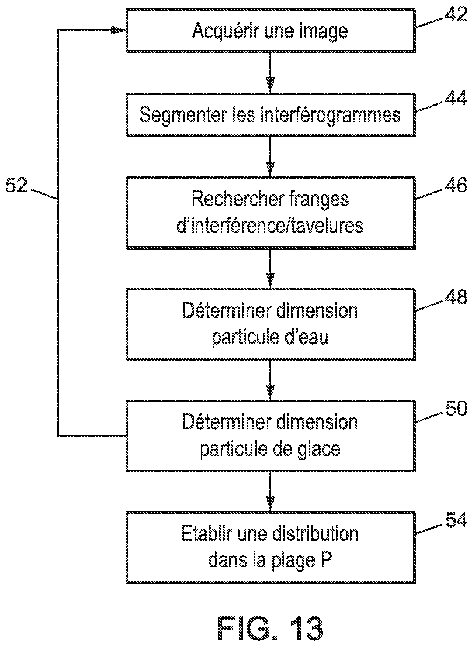

L'étape de détermination 40 comporte des sous-étapes 42 à 54 représentées sur une figure 13.

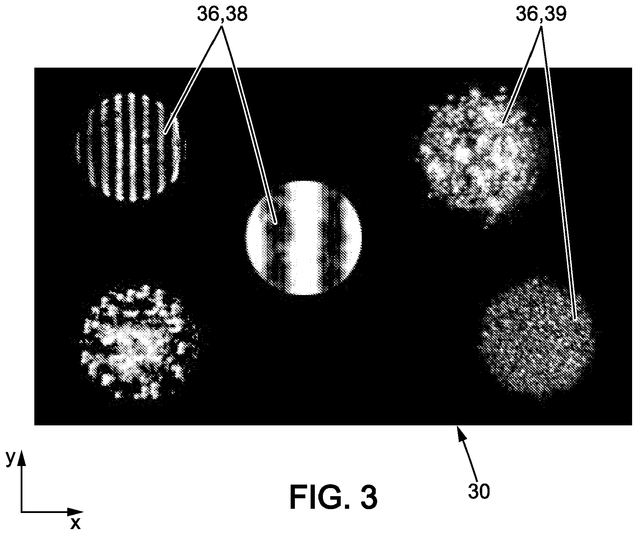

Au cours d'une sous étape 42, l'imageur 8 acquiert une image 30 représentant le volume d'échantillonnage 14. Un exemple d'une telle image 30 est représenté sur la figure 3.

L'image 30 contient un nombre d'interférogrammes 36 égal au nombre de particules 10, 12 qu'il y a dans le volume d'échantillonnage 14 au moment de la prise d'image. Les interférogrammes 36 se présentent tous sous la forme de disque de même diamètre quel que soit la dimension des particules. Le diamètre des interférogrammes est calculé à partir des paramètres d'acquisition de l'imageur. Les disques contenant des franges d'interférence parallèles 38 correspondent à des particules d'eau 11. Les disques contenant des tavelures 39 (en anglais « speckle ») sont représentatives de particules de glace 12.

Au cours d'une sous étape 44, les interférogrammes sont séparés du fond de l'image par segmentation.

A cet effet, un seuillage adaptatif est effectué sur l'ensemble de l'image 30 en fonction du niveau de gris moyen de l'image, suivi d'un filtrage médian. Une ouverture morphologique (une érosion suivie d'une dilatation) est ensuite réalisée pour éliminer les objets qui sont trop petits pour appartenir à un interférogramme de dimension fixe connue. Une série de dilatations successives est réalisée afin de connecter les éléments restants pour former les marqueurs des interférogrammes que l'on recherche. Les centres de ces marqueurs sont ensuite recherchés. L'image d'origine est ensuite masquée avec des disques dont les centres sont ceux des marqueurs. Ces disques présentent un diamètre identique à celui des interférogrammes. Ce diamètre est calculé à partir des paramètres d'acquisition.

Au cours d'une sous-étape 46, les interférogrammes 36 représentatifs des particules d'eau 11 et les interférogrammes 36 représentatifs des particules de glace 12 sont recherchés. Pour chaque interférogramme segmenté, la fonction d'autocorrélation selon l'axe y est calculée. Lorsque la largeur à mi-hauteur du pic d'autocorrélation obtenu est inférieure à un seuil défini alors cet interférogramme est représentatif d'une particule d'eau 11, sinon cet interférogramme est représentatif d'une particule de glace 12. Le seuil est défini en fonction des paramètres d'acquisition.

Au cours d'une sous étape 48, pour chaque interférogramme 36 représentatif d'une particule d'eau, la dimension di de cette particule est calculée. A cet effet, la transformée de Fourier de l'interférogramme est calculée, et l'interfrange en est déduit. Puis, la dimension di de la particule 11 d'eau est calculée à partir de cet interfrange en utilisant l'équation classique d'ILIDS décrite dans le document *« G. Koenig, K. Anders, and A. Frohn. A new light-scattering technique to measure the diameter of periodically generated moving droplets. Journal of Aerosol Sciences, 17:157-167, 1986 ».*

Au cours d'une sous étape 50, pour chaque interférogramme 36 de particule de glace 12 identifié, la dimension di de cette particule de glace est mesurée en réalisant une fonction d'autocorrélation à deux dimensions du motif de tavelure 39. Cette fonction d'autocorrélation permet d'obtenir une distribution en forme de pic. Puis, la largeur à mi-hauteur du pic est mesurée. La dimension di de la particule de glace 12 selon un plan parallèle au plan d'acquisition d'images 22, est évaluée à partir de cette largeur à mi-hauteur, comme décrit dans les publications scientifiques comme « D. CHICEA. Biospeckle size and contrast measurement application in particle sizing and concentration assessment. Biophysics, September 12, 2006 ».

Avantageusement, au cours d'une sous étape 52, le procédé retourne à la sous étape 50. Les étapes 42 à 50 sont réalisées sur plusieurs images afin d'obtenir un résultat représentatif de la nature globale de l'atmosphère.

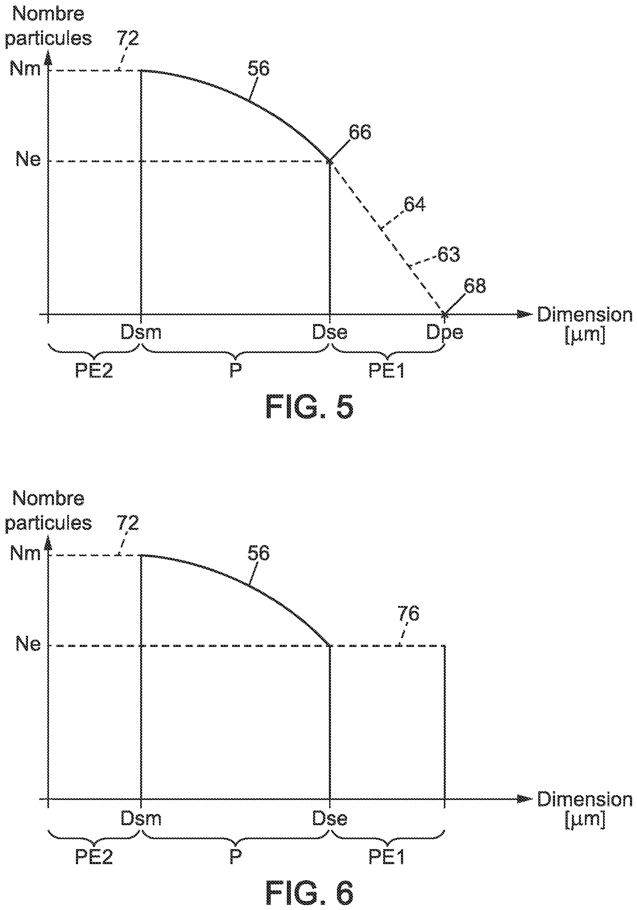

Au cours d'une sous étape 54, une distribution 56 du nombre de particules d'eau 10 en fonction de la dimension de ces particules est établie dans la plage de dimension donnée P. Un exemple d'une telle distribution 56 est représenté sur la figure 5. Une distribution du nombre de particules de glace en fonction de la dimension de ces particules de glace est également établie dans la plage de dimension donnée P. La distribution établie pour les particules de glace n'a pas été représentée.

En référence à la figure 4, le procédé de détermination selon le premier mode de réalisation se poursuit par une étape 58 au cours de laquelle la masse des particules 10, 12 est mesurée dans la plage de dimension donnée P à partir des dimensions déterminées au cours de l'étape 40.

La masse d'eau du volume d'échantillonnage 14 est calculée. Pour cela, le volume de chaque particule d'eau 10 identifiée dans l'image est calculé à partir de la formule $\pi di^3/6$ où di est la dimension calculée au cours de la sous étape 48. Puis, les volumes calculés pour chaque particule d'eau sont additionnés afin de déterminer le volume de l'ensemble des particules d'eau contenues dans le volume d'échantillonnage. La masse d'eau correspondant à ce volume est calculée en multipliant la masse volumique de l'eau par le volume de l'ensemble des particules d'eau. Enfin, cette masse d'eau est divisée par le volume d'échantillonnage défini en mètre cube.

La masse de glace du volume d'échantillonnage 14 est calculée. Pour cela, le volume de chaque particule de glace identifiée dans l'image est calculé à partir de lois masses-diamètres en considérant la dimension di calculée au cours de la sous étape 50, et en utilisant une méthode telle que celle proposée par Heymsfield dans « ANDREW J. HEYMSFIELD. Refinements to Ice Particle Mass Dimensional and Terminal Velocity Relationships for Ice Clouds. Part II: Evaluation and Parameterizations of Ensemble Ice Particle Sédimentation Velocities. Journal Of The Atmospheric Sciences 2006 ». Puis, les masses calculées pour chaque particule de glace sont additionnées afin de déterminer la masse de l'ensemble des particules de glace contenues dans le volume d'échantillonnage. Enfin, cette masse de glace est divisée par le volume d'échantillonnage défini en mètre cube.

La masse d'eau et la masse de glace sont ensuite additionnées pour obtenir la masse des particules 10, 12 comprise dans la plage de dimensions donnée P.

Puis, les étapes 60 à 70 sont mises en œuvre pour estimer la masse des particules ayant des dimensions contenues dans chaque plage de dimensions non imagée par l'imageur 8. Par exemple, dans l'exemple de réalisation illustré sur la figure 5, les étapes 60 à 70 sont tout d'abord mises en œuvre pour estimer la masse des particules ayant des dimensions contenues dans une première plage de dimensions évaluée PE1. Puis, les étapes 60 à 70 sont mises en œuvre pour estimer la masse des particules ayant des dimensions contenues dans une deuxième plage de dimensions évaluée PE2.

Dans l'exemple de réalisation illustré sur la figure 5, une première méthode d'extrapolation linéaire est utilisée pour estimer la masse des particules ayant des dimensions contenues dans la première plage de dimensions évaluée PE1 et une deuxième méthode d'extrapolation linéaire est utilisée pour estimer la masse des particules ayant des dimensions contenues dans la deuxième plage de dimensions évaluée PE2.

La première méthode est mise en œuvre dans une plage de dimensions ayant des dimensions supérieures aux dimensions de la plage de dimensions donnée.

Selon cette première méthode :
Au cours d'une étape 60, le nombre de particules d'eau Ne ayant une dimension di égale à une dimension seuil Dse est déterminé. Puis, le nombre de particules de glace Ng non représenté ayant une dimension di égale à une dimension seuil non représenté Dsg est déterminé.

Les dimensions seuil Dse et Dsg sont des dimensions comprises dans la plage de dimension donnée P. De préférence, les dimensions seuil Dse et Dsg sont les dimensions les plus grandes de la plage de dimension donnée.

Au cours d'une étape 62, la distribution 63 du nombre de particules d'eau dans la plage de dimension estimée PE1 est évaluée par extrapolation linéaire de la distribution 56, comme visible sur la figure 5. Cette extrapolation linéaire est réalisée à partir du nombre de particules d'eau Ne ayant une dimension seuil Dse et une dimension Dpe prédéfinie par la réglementation en vigueur au moment de la mise en oeuvre de l'invention. Actuellement, cette réglementation est le règlement CS25.

Cette dimension prédéfinie Dpe est la dimension théorique au-delà de laquelle il n'y a plus de particule d'eau dans l'atmosphère. Selon le règlement CS25, la dimension prédéfinie Dpe est sensiblement égale à 2300 micromètres.

D'une manière pratique, la distribution 63 est représentée sur la figure 5 par une droite 64 reliant un point 66 au point 68. Le point 66 est définie par le nombre de particules d'eau Ne et la dimension seuil Dse. Le point 68 est défini par une absence de particule d'eau 10 ayant une dimension Dpe supérieure à environ 2300.

Puis, la distribution du nombre de particules de glace dans la plage de dimension estimée PE1 est évaluée par extrapolation linéaire de la distribution du nombre de particules de glace dans la plage de dimensions donnée P. Cette extrapolation linéaire est réalisée à partir du nombre Ng de particules de glace ayant une dimension seuil Dsg et une dimension prédéfinie Dpg définie par la réglementation en vigueur au moment de la mise en œuvre de l'invention. Actuellement, cette réglementation est le règlement CS33. Cette dimension prédéfinie Dpe est la dimension théorique au-delà de laquelle il n'y a plus de particule de glace dans l'atmosphère. Selon le règlement CS33, la dimension prédéfinie Dpg est sensiblement égale à 2700 micromètres.

Au cours d'une étape 70, la masse des particules d'eau ayant une dimension comprise dans la plage de dimension estimée PE1 est obtenue à partir de la distribution 63 du nombre de particules d'eau estimée et de la relation mathématique explicitée dans l'étape 58. De la même façon, la masse des particules de glace ayant une dimension comprise dans la plage de dimension estimée PE1 est obtenue à partir de la distribution du nombre de particules de glace estimée et à partir des lois masses-diamètres comme explicité dans l'étape 58. La masse des particules d'eau et la masse des particules de glace sont alors additionnées.

La deuxième méthode est mise en œuvre dans une plage de dimensions ayant des dimensions inférieures aux dimensions de la plage de dimensions donnée.

Selon la deuxième méthode :

Au cours d'une étape 60, le nombre de particules d'eau Nm ayant une dimension di égale à une dimension seuil Dsm est déterminé. Puis, le nombre de particules de glace ayant une dimension di égale à une dimension seuil Dsmg est déterminé.

Les dimensions seuil Dsm et Dsmg sont des dimensions comprises dans la plage de dimensions donnée P. De préférence, les dimensions seuil Dse et Dsg sont les dimensions les plus petites de la plage de dimensions donnée.

Au cours d'une étape 62, le nombre de particules d'eau évalué dans la plage de dimensions évaluée PE2 est considéré comme étant constant quel que soit la dimension des particules. Ce nombre est égal au nombre de particules déterminé à l'étape 60 c'est-à-dire au nombre de particules ayant une dimension égale à la dimension seuil Dsm.

De la même façon, le nombre de particules de glace dans la plage de dimensions évaluée PE2 est considéré comme étant constant. Il est égal au nombre de particules déterminé à l'étape 60 c'est-à-dire au nombre de particules ayant une dimension égale à la dimension seuil Dsmg.

Au cours d'une étape 70, la masse des particules d'eau et la masse des particules de glace ayant une dimension comprise dans la plage de dimension estimée PE2 est calculée.

Au cours d'une étape 74, la teneur en eau est déterminée en additionnant la masse des particules d'eau et de glace ayant une dimension comprise dans la plage de dimensions donnée P, la masse des particules d'eau et de glace ayant une dimension dans la première plage de dimensions estimée PE1 et la masse des particules d'eau et de glace ayant une dimension dans la deuxième plage de dimensions estimée PE2.

En variante, la teneur en eau est déterminée par mise en œuvre du procédé uniquement sur deux plages de dimensions. Par exemple, le procédé peut être mis en œuvre uniquement sur la plage de dimensions donnée P et sur la première plage de dimensions estimée PE1 ou uniquement sur la plage de dimensions donnée P et la deuxième plage de dimensions estimée PE2. Dans ce cas, la teneur en eau n'est pas déterminée dans l'ensemble de la plage de dimensions requise par la réglementation actuelle.

Selon une variante du premier exemple de réalisation non couvert par la présente demande de brevet, la distribution 76 du nombre de particules dans la première plage de dimensions estimée PE1 et la distribution 72 du nombre de particules dans la deuxième plage de dimensions estimée PE2 sont réalisées par la deuxième méthode décrite ci-dessus.

En particulier, la distribution 76 est obtenue :

- par détermination du nombre de particules d'eau Ne ayant une dimension di égale à la dimension seuil Dse et par détermination du nombre de particules de glace ayant une dimension di égale à la dimension seuil Dsg, et
- par considération que le nombre de particules d'eau dans la première plage de dimensions évaluée PE1 est constant et égal au nombre de particules d'eau Ne ayant la dimension Dse et que le nombre de particules de glace dans la première plage de dimensions évaluée PE1 est constant et égal au nombre de particules de glace ayant la dimension Dsg.

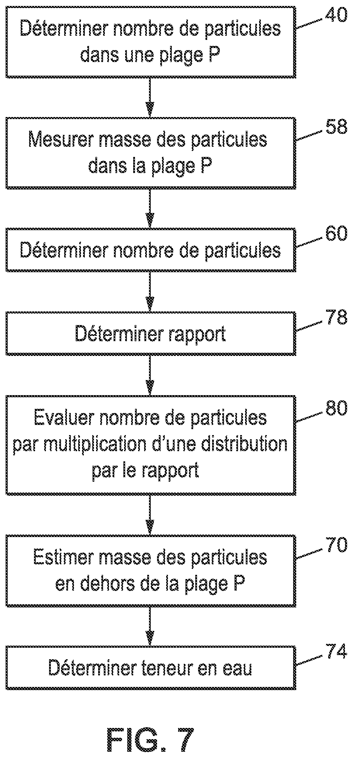

En référence à la figure 7, le procédé de détermination selon l'invention comporte des étapes 40 à 60, 70 et 74 identiques aux étapes 40 à 60, 70 et 74 du procédé de détermination selon le premier exemple de réalisation. Ces étapes ne seront pas décrites une nouvelle fois.

Au cours de l'étape 60 du procédé de détermination selon l'invention, le nombre de particules d'eau Ne ayant une dimension égale à la dimension seuil Dse et le nombre de particules de glace Ng ayant une dimension di égale à la dimension seuil Dsg ont été déterminés.

Au cours d'une étape 78 mise en œuvre après l'étape 60, l'unité de calcul détermine le nombre A de particules d'eau ayant la dimension seuil Dse de la distribution prédéfinie 34 enregistrée dans l'unité de stockage 28, comme représentée sur la figure 8. Puis, l'unité de calcul calcule le rapport entre, d'une part, le nombre de particules d'eau Ne ayant la dimension seuil Dse et, d'autre part, le nombre A.

Un rapport similaire est également calculé pour les particules de glace. Ce rapport est établi entre :

d'une part, le nombre de particules de glace ayant la dimension seuil Dsg d'une distribution prédéfinie de particules de glace enregistrée dans l'unité de stockage 28, et

d'autre part, le nombre de particules de glace ayant la dimension seuil Dsg de la distribution prédéfinie enregistrée dans l'unité de stockage 28.

Au cours de l'étape 80, le nombre de particules d'eau ayant une dimension contenue dans la première plage de dimensions PE1 est évalué par multiplication de la distribution des particules d'eau 34 par le rapport calculé au cours de l'étape 78 pour les particules d'eau. Ainsi, l'ensemble des nombres de particules de la distribution prédéfinie 34 est multiplié par le rapport déterminé. Cette multiplication permet par exemple d'obtenir une distribution 82 des particules d'eau dans la première plage de dimensions évaluée PE1 telle qu'illustrée sur la figure 9.

De la même façon, le nombre de particules de glace ayant une dimension contenue dans la première plage de dimensions PE1 est évalué par multiplication de la distribution des particules de glace par le rapport calculée au cours de l'étape 78 pour les particules de glace.

Les étapes 60 à 80 sont également mises en œuvre pour évaluer le nombre de particules d'eau et le nombre de particules de glace ayant une dimension contenue dans la deuxième plage de dimensions estimée PE2. Cette fois, des distributions prédéfinies du nombre de particules dans la deuxième plage de dimensions évaluée P2 sont utilisées.

Les nombres de particules évalués au cours de l'étape 80 sont utilisés pour estimer la masse des particules au cours de l'étape 70 comme décrit dans le premier exemple de réalisation.

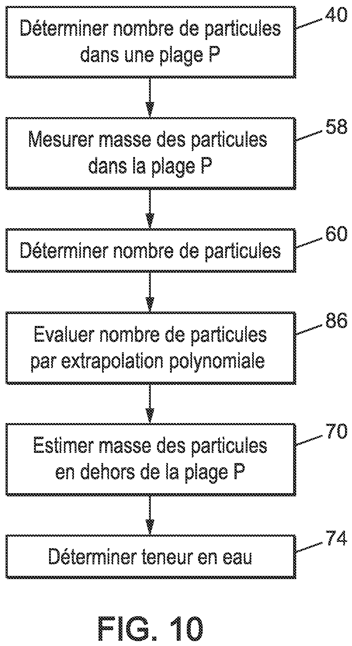

En référence à la figure 10, le procédé de détermination selon un deuxième exemple de réalisation non couvert par la présente demande de brevet comporte des étapes 40 à 60, 70 et 74 identiques aux étapes 40 à 60, 70 et 74 du procédé de détermination selon le premier exemple. Ces étapes ne seront pas décrites une nouvelle fois.

Le procédé de détermination selon le deuxième exemple de réalisation comporte à la place de l'étape 62, une étape 86, au cours de laquelle le nombre de particules est estimé par extrapolation polynomiale et en particulier par extrapolation logarithmique.

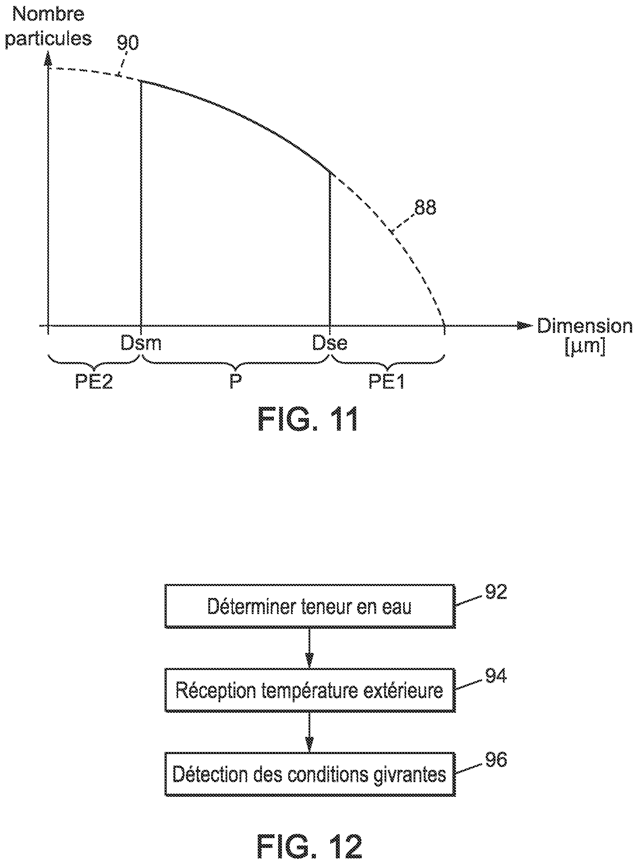

La figure 11 illustre des distributions 88, 90 du nombre de particules sur la première PE1 et la deuxième PE2 plages de dimensions estimée. Ces distribution 88, 90 ont été obtenue par extrapolation logarithmique à partir des nombres de particules ayant la dimension seuil Dsm et respectivement la dimension seuil Dse.

En variante, l'ensemble de ces méthodes et de ces modes de réalisation peuvent être combinés l'un avec l'autre pour déterminer la masse de glace et la masse d'eau dans la première PE1 et la deuxième PE2 plages de dimensions estimée.

Enfin, l'invention concerne également un procédé de détection des conditions givrantes, illustré sur la figure 12.

Ce procédé de détection des conditions givrantes débute par une étape 92 au cours de laquelle l'unité de traitement 16 détermine la teneur en eau par mise en œuvre du procédé de détermination décrit ci-dessus.

Puis, au cours d'une étape 94, l'entrée 32 de l'unité de traitement réceptionne une valeur de température extérieure.

Enfin, au cours d'une étape 96, l'unité de traitement 16 détecte la présence de conditions atmosphériques givrantes à partir de la teneur en eau de la valeur de température extérieure en appliquant la règlement en vigueur et notamment les normes CFR mentionnées précédemment.

**Revendications**

1. Procédé de détermination de la teneur en eau dans l'atmosphère par traitement d'images (30) acquises par un dispositif d'imagerie interférométrique (2) en défaut de mise au point embarqué dans un aéronef en vol, ledit procédé étant mis en œuvre par une unité de traitement (16) comportant une unité de calcul (26) et une unité de stockage (28), ladite unité de stockage (28) comportant au moins une distribution prédéterminée (34, 84) du nombre de particules (10, 12) en fonction de la dimension de ces particules en dehors d'une plage de dimensions donnée (P), ladite distribution prédéterminée (34, 84) comprenant un nombre de particules ayant une dimension seuil (Dse, Dsm, Dsg), ledit dispositif (2) étant uniquement propre à imager des particules d'eau (10) et de glace (12) ayant une dimension (di) comprise dans la plage de dimensions donnée (P), ledit procédé comprenant les étapes suivantes Pour au moins une image (30),

a) Déterminer (40) le nombre de particules comprises dans la plage de dimensions donnée (P) à partir de ladite image (30);
b) Mesurer (58) la masse des particules (10, 12) ayant une dimension (di) comprise dans la plage de dimensions donnée (P) à partir du nombre de particules déterminé ;
c) Estimer (60, 62, 70, 78, 80,86) la masse des particules (10, 12) ayant une dimension (di) en dehors de la plage de dimensions donnée (P), ladite étape d'estimation comprenant les étapes suivantes :

i) Déterminer (60) le nombre de particules ayant une dimension égale à la dimension seuil (Dse, Dsm, Dsg);

ii) Evaluer (62, 78, 80,86) le nombre de particules en dehors de la plage de dimensions donnée (P) par multiplication de la distribution prédéterminée (34, 84) par le rapport entre le nombre de particules déterminé à l'étape i) et le nombre de particules de ladite distribution ayant ladite dimension seuil (Dse, Dsm, Dsg);

iii) Estimer (70) la masse des particules en dehors de la plage de dimensions donnée (P) à partir du nombre de particules évalué ;

d) Déterminer (74) la teneur en eau par addition de la masse estimée et de la masse mesurée.

**2.** Procédé de détermination de la teneur en eau dans l'atmosphère selon la revendication 1, dans lequel les distributions prédéterminées ont été préalablement établies à partir de nombreuses mesures.

**3.** Procédé de détermination de la teneur en eau dans l'atmosphère selon la revendication 1, dans lequel les distributions prédéterminées ont été préalablement établies en fonction de la température extérieure, l'unité de calcul (26) étant propre à recevoir une valeur de température extérieure et à sélectionner une distribution préétablie pour cette valeur de température.

**4.** Procédé de détermination de la teneur en eau dans l'atmosphère selon l'une quelconque des revendications précédentes, dans lequel la plage de dimensions donnée (P) est comprise entre 50 micromètres et 1000 micromètres, et est de préférence comprise entre 70 micromètres et 700 micromètres.

**5.** Procédé de détection des conditions atmosphérique givrantes, **caractérisé en ce qu'**il comporte les étapes suivantes:

- détermination (92) de la teneur en eau par mise en œuvre du procédé de détermination selon l'une quelconque des revendications 1 à 4;
- réception (94) d'une valeur de température extérieure ;
- détection (96) des conditions atmosphériques givrantes à partir de la teneur en eau et de la valeur de température extérieure.

**6.** Programme d'ordinateur comportant des instructions pour mettre en œuvre le procédé de détermination selon l'une quelconque des revendications 1 à 4, lorsqu'il est exécuté par un processeur.

**7.** Programme d'ordinateur comportant des instructions pour mettre en œuvre le procédé de détection selon la revendication 5, lorsqu'il est exécuté par un processeur.

**Patentansprüche**

**1.** Verfahren zum Bestimmen des Wassergehalts in der Atmosphäre durch Verarbeiten von Bildern (30), die von einer unscharf eingestellten, interferometrischen Bildgebungsvorrichtung (2) an Bord eines fliegenden Luftfahrzeugs aufgenommen sind, wobei das Verfahren von einer Verarbeitungseinheit (16) implementiert wird, die eine Berechnungseinheit (26) und eine Speichereinheit (28) umfasst, wobei die Speichereinheit (28) mindestens eine vorbestimmte Verteilung (34, 84) der Anzahl von Partikeln (10, 12) als Funktion der Dimension dieser Partikel außerhalb eines gegebenen Dimensionsbereichs (P) umfasst, wobei die vorbestimmte Verteilung (34, 84) eine Anzahl von Partikeln, die eine Schwellendimension (Dse, Dsm, Dsg) aufweisen, umfasst, wobei die Vorrichtung (2) ausschließlich dazu geeignet ist Wasser- (10) und Eispartikel (12) abzubilden, die eine Dimension (di) innerhalb des gegebenen Dimensionsbereichs (P) aufweisen, wobei das Verfahren die folgenden Schritte umfasst
Für mindestens ein Bild (30)

a) Bestimmen (40) der Anzahl von Partikeln, die in dem gegebenen Dimensionsbereich (P) umfasst sind, aus dem Bild (30);
b) Messen (58) der Masse der Partikel (10, 12), die eine Dimension (di) aufweisen, die in dem gegebenen Dimensionsbereich (P) umfasst ist, aus der Anzahl der bestimmten Partikel;
c) Schätzen (60, 62, 70, 78, 80, 86) der Masse der Partikel (10, 12), die eine Dimension (di) außerhalb des gegebenen Dimensionsbereichs (P) aufweisen, wobei der Schritt eines Schätzens die folgenden Schritte umfasst:

i) Bestimmen (60) der Anzahl von Partikeln, die eine Dimension aufweisen, die einer Schwellendimension (Dse, Dsm, Dsg) entspricht;
ii) Bewerten (62, 78, 80, 86) der Anzahl der Partikel außerhalb des gegebenen Dimensionsbereichs (P) durch Multiplikation der vorbestimmten Verteilung (34, 84) mit dem Verhältnis zwischen der Anzahl an in dem Schritt i) bestimmten Partikeln und der Anzahl an Partikeln der Verteilung, die die Schwellendimension (Dse, Dsm, Dsg) aufweisen;
iii) Schätzen (70) der Masse der Partikel außerhalb des gegebenen Dimensionsbereichs (P) aus der Anzahl der bewerteten Partikel;

d) Bestimmen (74) des Wassergehalts durch Addition der geschätzten Masse und der gemessenen Masse.

2. Verfahren zum Bestimmen des Wassergehalts in der Atmosphäre nach Anspruch 1, bei dem die vorbestimmten Verteilungen vorher aus vielen Messungen festgelegt worden sind.

3. Verfahren zum Bestimmen des Wassergehalts in der Atmosphäre nach Anspruch 1, bei dem die vorbestimmten Verteilungen vorher entsprechend der Außentemperatur festgelegt worden sind, wobei die Berechnungseinheit (26) geeignet ist, einen Außentemperaturwert zu erhalten und eine vorher festgelegte Verteilung für diesen Temperaturwert auszuwählen.

4. Verfahren zum Bestimmen des Wassergehalts in der Atmosphäre nach einem der vorhergehenden Ansprüche, bei dem der gegebene Dimensionsbereich (P) zwischen 50 Mikrometer und 1000 Mikrometer liegt und vorzugsweise zwischen 70 Mikrometer und 700 Mikrometer liegt.

5. Verfahren zum Erfassen der atmosphärischen Vereisungsbedingungen, **dadurch gekennzeichnet, dass** es die folgenden Schritte umfasst:

- Bestimmung (92) des Wassergehalts durch Implementierung des Bestimmungsverfahrens gemäß einem der Ansprüche 1 bis 4;
- Empfang (94) eines Außentemperaturwerts;
- Erfassung (96) der atmosphärischen Vereisungsbedingungen anhand des Wassergehalts und des Au ßentemperaturwerts.

6. Computerprogramm, umfassend Anweisungen zum Implementieren des Bestimmungsverfahrens gemäß einem der Ansprüche 1 bis 4, wenn es von einem Prozessor ausgeführt wird.

7. Computerprogramm, umfassend Anweisungen zum Implementieren des Erfassungsverfahrens nach Anspruch 5, wenn es von einem Prozessor ausgeführt wird.

**Claims**

1. Method for determining the water content in the atmosphere by processing images (30) acquired by an out-of-focus interferometric imaging device (2), said method is implemented by a processing unit (16) comprising a calculation unit (26) and a storage unit (28), said storage unit (28) comprising at least a predetermined distribution (34, 84) of the number of particles (10, 12) according to the size of these particles outside said given range of sizes (P), said predetermined distribution (34, 84) comprising a number of particles having said threshold size (Dse, Dsm, Dsg), said device (2) being solely able to image water (10) and ice (12) particles having a size (di) lying in a given range of sizes (P), said method comprising the following step For at least one image (30),

a) determining (40) the number of particles lying the given range of sizes (P) from said image (30);
b) measuring (58) the mass of particles (10, 12) having a size (di) lying in the given range (P) of sizes from the number of particles determined;
c) estimating (60, 62, 70, 78, 80, 86) the mass of particles (10, 12) having a size outside the given range of sizes (P), said estimation step comprising the following steps:

i) determining (60) the number of particles having a size equal to a threshold size (Dse, Dsm, Dsg);
ii) evaluating (62, 78, 80, 86) the number of particles outside the given range of sizes by multiplying the predetermined distribution (34, 84) by the ratio between the number of particles determined at step i) and the number of particles in said distribution having said threshold size (Dse, Dsm, Dsg) ;
iii) estimating (70) the mass of the particles outside the given range of sizes (P) from the number of particles evaluated;

d) determining (74) the water content by adding the estimated mass and the measured mass.

2. Determination method for determining the water content according to claim 1, in which the predetermined distributions (34, 84) have been previously established from numerous measurements.

3. Determination method for determining the water content according to claim 1, in which the predetermined distributions (34, 84) have been previously established from the external temperature ; the calculation unit (26) being adapted to receive a value of external temperature and to select one distribution established for this value of temperature.

4. Method for determining the water content in the atmosphere according to any of the preceding claims, in which the given range of sizes (P) is between 50 micrometres and 1000 micrometres, and is preferably between 70 micrometres and 700 micrometres.

5. Method for detecting icy atmospheric conditions, **characterised in that** it comprises the following steps:

- determining (92) the water content by implementing the determination method according to any of claims 1 to 4;
- receiving (94) an external temperature value;
- detecting (96) icing atmospheric conditions from the water content and the external temperature value.

6. Computer program, containing instructions for implementing the determination method according to any of claims 1 to 4, when it is executed by a processor.

7. Computer program, containing instructions for implementing the detection method according to claim 5, when it is executed by a processor.

# FIG. 1

# FIG. 2

FIG. 3

```
┌─────────────────────────────┐
│  Déterminer nombre de       │──── 40
│  particules                 │
│  dans une plage P           │
└─────────────────────────────┘
              │
              ▼
┌─────────────────────────────┐
│  Mesurer masse des          │──── 58
│  particules                 │
│  dans la plage P            │
└─────────────────────────────┘
              │
              ▼
┌─────────────────────────────┐
│  Déterminer nombre de       │──── 60
│  particules                 │
└─────────────────────────────┘
              │
              ▼
┌─────────────────────────────┐
│  Evaluer nombre de          │──── 62
│  particules                 │
│  par extrapolation linéaire │
└─────────────────────────────┘
              │
              ▼
┌─────────────────────────────┐
│  Estimer masse des          │──── 70
│  particules                 │
│  en dehors de la plage P    │
└─────────────────────────────┘
              │
              ▼
┌─────────────────────────────┐
│  Déterminer teneur en eau   │──── 74
└─────────────────────────────┘
```

# FIG. 4

FIG. 5

FIG. 6

```
┌─────────────────────────────────┐
│  Déterminer nombre de particules │──40
│       dans une plage P           │
└─────────────────────────────────┘
                 │
                 ▼
┌─────────────────────────────────┐
│   Mesurer masse des particules   │──58
│        dans la plage P           │
└─────────────────────────────────┘
                 │
                 ▼
┌─────────────────────────────────┐
│   Déterminer nombre de particules │──60
└─────────────────────────────────┘
                 │
                 ▼
┌─────────────────────────────────┐
│        Déterminer rapport        │──78
└─────────────────────────────────┘
                 │
                 ▼
┌─────────────────────────────────┐
│   Evaluer nombre de particules   │──80
│ par multiplication d'une distribution │
│         par le rapport           │
└─────────────────────────────────┘
                 │
                 ▼
┌─────────────────────────────────┐
│   Estimer masse des particules   │──70
│       en dehors de la plage P    │
└─────────────────────────────────┘
                 │
                 ▼
┌─────────────────────────────────┐
│      Déterminer teneur en eau    │──74
└─────────────────────────────────┘
```

## FIG. 7

FIG. 8

FIG. 9

Déterminer nombre de particules dans une plage P — 40

Mesurer masse des particules dans la plage P — 58

Déterminer nombre de particules — 60

Evaluer nombre de particules par extrapolation polynomiale — 86

Estimer masse des particules en dehors de la plage P — 70

Déterminer teneur en eau — 74

## FIG. 10

Nombre
particules

90

88

Dsm

Dse

Dimension
[µm]

PE2

P

PE1

FIG. 11

Déterminer teneur en eau — 92

Réception température extérieure — 94

Détection des conditions givrantes — 96

FIG. 12

FIG. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Z. ULANOWSKI et al.** Retrieving the size of particles with rough and complex surfaces from two-dimensional scattering patterns. *Journal of Quantitative Spectroscopy and Radiative Transfer.,* 2012
- **D. CHICEA.** Biospeckle size and contrast measurement application in particle sizing and concentration assessment. *Biophysics,* 12 Septembre 2006
- **YOSHIO ZAMA et al.** *Simultaneous Measurement of Droplet Size and Three-Components of velocity in Spray*
- **G. KOENIG ; K. ANDERS ; A. FROHN.** A new light-scattering technique to measure the diameter of periodically generated moving droplets. *Journal of Aerosol Sciences,* 1986, vol. 17, 157-167
- **ANDREW J. HEYMSFIELD.** Refinements to Ice Particle Mass Dimensional and Terminal Velocity Relationships for Ice Clouds. Part II: Evaluation and Parameterizations of Ensemble Ice Particle Sédimentation Velocities. *Journal Of The Atmospheric Sciences,* 2006